# EUROPÄISCHE PATENTANMELDUNG

(11) **EP 4 235 452 A1**
(43) Veröffentlichungstag der Anmeldung: **30.08.2023**
(21) Anmeldenummer: 22207977.4
(22) Anmeldetag: 17.11.2022
(51) Int. Cl.: G06F 16/245

(54) **VERFAHREN UND SYSTEMANORDNUNG ZUM EFFIZIENTEN ABFRAGEN EINES DATENBANKSYSTEMS**

(71) Anmelder: Patentpool Target GmbH, 80331 München (DE)
(72) Erfinder: Schloer, Frank, 80331 München (DE)
(74) Vertreter: Reich, Jochen

(57) **Zusammenfassung**

Die vorliegende Erfindung ist auf ein Verfahren zum Ansteuern und effizienten Abfragen eines Datenbanksystems gerichtet, welches es ermöglicht, dass nicht diverse Anfragen für einen bestimmten Datensatz gestartet werden müssen, sondern vielmehr können Konfigurationsdaten hinterlegt werden die iterativ abgeprüft werden. Somit ist es erfindungsgemäß möglich, dass eine komplette Anfrage nicht stets wiederholt mit allen Parametern gestellt werden muss, sondern vielmehr können einzelne Konfigurationsdaten bereits in einem Datensatz verwirklicht sein und sobald alle spezifizierten Konfigurationsdaten vorliegen, wird eine Antwort übermittelt. Hierdurch wird der Systemdurchsatz erhöht, da zum einen nicht alle Suchkriterien stets abgeprüft werden müssen und zum anderen kann die Anfrage in einer Monitoreinheit hinterlegt werden und diese durchsucht proaktiv ein Datenbanksystem und liefert ein Ergebnis, sobald alle Konfigurationsdaten aufgefunden wurden. Somit wird ein Datenbanksystem besonders effizient abgefragt und der Systemdurchsatz wird verbessert. Die Erfindung ist ferner gerichtet auf eine entsprechend eingerichtete Systemanordnung umfassend ein Datenbanksystem und ist ferner gerichtet auf ein Computerprogrammprodukt mit Steuerbefehlen, welche das vorgeschlagene Verfahren ausführen bzw. die vorgeschlagene Systemanordnung betreiben. Ferner wird ein computerlesbares Speichermedium vorgeschlagen.

## Beschreibung

Die vorliegende Erfindung ist auf ein Verfahren zum Ansteuern und effizienten Abfragen eines Datenbanksystems gerichtet, welches es ermöglicht, dass nicht diverse Anfragen für einen bestimmten Datensatz gestartet werden müssen, sondern vielmehr können Konfigurationsdaten hinterlegt werden die iterativ abgeprüft werden. Somit ist es erfindungsgemäß möglich, dass eine komplette Anfrage nicht stets wiederholt mit allen Parametern gestellt werden muss, sondern vielmehr können einzelne Konfigurationsdaten bereits in einem Datensatz verwirklicht sein und sobald alle spezifizierten Konfigurationsdaten vorliegen, wird eine Antwort übermittelt. Hierdurch wird der Systemdurchsatz erhöht, da zum einen nicht alle Suchkriterien stets abgeprüft werden müssen und zum anderen kann die Anfrage in einer Monitoreinheit hinterlegt werden und diese durchsucht proaktiv ein Datenbanksystem und liefert ein Ergebnis, sobald alle Konfigurationsdaten aufgefunden wurden. Somit wird ein Datenbanksystem besonders effizient abgefragt und der Systemdurchsatz wird verbessert. Die Erfindung ist ferner gerichtet auf eine entsprechend eingerichtete Systemanordnung umfassend ein Datenbanksystem und ist ferner gerichtet auf ein Computerprogrammprodukt mit Steuerbefehlen, welche das vorgeschlagene Verfahren ausführen bzw. die vorgeschlagene Systemanordnung betreiben. Ferner wird ein computerlesbares Speichermedium vorgeschlagen.

EP 1877932 B1 zeigt ein Verfahren zur Aggregation und Analyse von dezentralisiert gespeicherten Multimediadaten, wobei in einem Datenspeicher ein oder mehrere verknüpfbare Suchbegriffe abgespeichert werden.

EP 2538347 B1 zeigt ein Datenverarbeitungssystem zur dynamischen Erfassung von gewichteten Zusammenhängen zwischen Informationen repräsentierenden Daten in wenigstens einem Datenbestand.

Aus dem Stand der Technik sind Datenbanküberwachungsprogramme bekannt, die die Funktion einer Datenbank überprüfen und sodann eine Ausfallerkennung durchführen. Solche Programme sind auch als Watch Dog bekannt. Hierzu werden regelmäßig Systemparameter ausgelesen und beispielsweise Antwortzeiten gemessen. Funktioniert die Datenbank bzw. das Datenbankmanagementsystem nicht ordnungsgemäß so erfolgt entweder eine Fehlermeldung an den Administrator oder das System wird neu gestartet. Zudem sind Back-up Systeme bekannt, die bei einem Ausfall eines ersten Datenbanksystems einspringen.

Aus dem Stand der Technik ist es bekannt, dass ein Benutzer mehrere Parameter in einer Suchanfrage spezifiziert und diese Suchanfrage wird sodann an ein Datenbankmanagementsystem übermittelt. Die vorhandenen Datensätze in dem Datenbankmanagementsystem werden sodann bezüglich der Suchkriterien evaluiert und es wird ein Ergebnis geliefert. Generell muss das zurückgegebene Ergebnis nicht komplett der Suchanfrage entsprechen, sondern vielmehr ist es bekannt eine Übereinstimmung der vorhandenen Datensätze mit der Suchanfrage zu berechnen und sodann eine Liste zurückzugeben, die derart priorisiert ist, dass das Ergebnis mit der größten Übereinstimmung weiter oben angeordnet ist.

Sucht ein Benutzer einen bestimmten Datensatz, welcher jedoch noch nicht vorhanden ist, so wird typischerweise trotzdem ein Ergebnis zurückgegeben und dieses entsprechend gewichtet. Dies entspricht aber nicht dem Wunsch des Benutzers, falls er genau den spezifizierten Datensatz einsehen möchte. Oftmals ist der Rückgabewert für den Benutzer belanglos, da er oftmals genau einen bestimmten Datensatz empfangen will und sich eben nicht mit einer gewissen Übereinstimmung zufrieden gibt. Somit werden die Erwartungen des Benutzers in diesem Szenario nicht erfüllt und der Benutzer erhält unbrauchbare Suchergebnisse und muss zudem seine Anfrage zu einer späteren Zeit erneut spezifizieren. Es wird also vom Benutzer erwartet, dass der gesuchte Datensatz zu einem späteren Zeitpunkt vorhanden ist und falls dies wieder nicht der Fall ist, muss der Benutzer erneut iterativ zu einem späteren Zeitpunkt eine Anfrage übermitteln. Dieses Vorgehen senkt jedoch die Akzeptanz in das bereitgestellte System und zudem wird der Systemdurchsatz verringert. Dies ist unter anderem deshalb der Fall, da die Suchanfrage jedes Mal komplett neu spezifiziert und übermittelt werden muss. Sodann erfolgt eine komplett neue Datenbankabfrage, welche wiederum Systemressourcen kostet. Der Aufwand steigert sich mit jeder neuen Suchanfrage und somit wird der Systemdurchsatz verringert.

Es besteht also im Stand der Technik das Problem, dass aufgrund von unzureichenden Rückgabeparametern eine Vielzahl von Anfragen gestellt wird, welche jeweils einen Aufwand bei dem Benutzer hervorruft und zudem Systemressourcen kostet. Dies kann wiederum nur dadurch bewerkstelligt werden, dass die Systemkapazitäten erhöht werden, was wiederum zu einem technischen Aufwand führt.

Ferner ist es aus dem Stand der Technik bekannt, Suchanfragen zwischenzuspeichern und Suchergebnisse gleich mit abzuspeichern. Stellt also ein erster Benutzer eine Anfrage, so wird diese berechnet und das Resultat wird persistent abgespeichert. Stellt nunmehr zeitversetzt ein zweiter Benutzer die gleiche Anfrage, so wird keine tatsächliche Datenbankabfrage durchgeführt, sondern vielmehr wird das vorab gespeicherte Ergebnis zurückliefert. Diese Rückgabe hat also nicht zwingendermaßen die Aktualität des aktuellen Datenstands berücksichtigt, sondern vielmehr werden einfach vergangene Ergebnisse erneut präsentiert.

Im Stand der Technik besteht ein Bedarf, ein System zu schaffen, welches es ermöglicht, dass aktuelle Datenbankanfragen bereitgestellt werden, die alle Suchanfragespezifikationen erfüllen und von dem Benutzer kein wiederholtes Anfragen erwartet wird. Zudem besteht eine Notwendigkeit ein Verfahren bzw. ein System zu schaffen, welches proaktiv eine Datenbank abfragt und erst bei einem korrekten Suchergebnis eine entsprechende Antwort zurückliefert.

Somit ist es die objektive technische Aufgabe der vorliegenden Erfindung ein Verfahren bereitzustellen, welches ein effizientes Abfragen einer Datenbank bzw. eines Datenbanksystems ermöglicht. Hierzu sollen Systemressourcen geschont werden und unnötige Datenbankabfragen sollen vermieden werden. Ferner ist es eine Aufgabe der vorliegenden Erfindung eine entsprechend eingerichtete Systemanordnung sowie ein Computerprogrammprodukt und ein Speichermedium bereitzustellen.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum Ansteuern und effizienten Abfragen eines Datenbanksystems mit verbesserten Systemdurchsatz vorgeschlagen, aufweisend ein Einrichten eines Kommunikationskanals zwischen einer Anfrageeinheit und einer dem Datenbanksystem vorgeschalteten Monitoreinheit; ein Strukturieren einer Anfrage an das Datenbanksystem durch die Anfrageeinheit derart, dass eine Mehrzahl von Konfigurationsdaten eines bereitzustellenden aber noch nicht vorhandenen Datensatzes spezifiziert wird; ein persistentes Hinterlegen der strukturierten Anfrage in der Monitoreinheit mittels des eingerichteten Kommunikationskanals durch die Anfrageeinheit; ein iteratives Abprüfen der Konfigurationsdaten des bereitzustellenden Datensatzes durch die Monitoreinheit; und ein Auslesen des Datensatzes aus dem Datenbanksystem durch die Monitoreinheit und Übersenden des Datensatzes an die Anfrageeinheit mittels des eingerichteten Kommunikationskanals sobald der Datensatz gemäß aller spezifizierten Konfigurationsdaten vorhanden ist.

Das Verfahren dient dem effizienten Ansteuern und effizienten Abfragen eines Datenbanksystems. Ein Datenbanksystem ist hierbei eine Datenbank mitsamt einer Funktionalität, die den Zugriff auf die Daten ermöglicht. Es handelt sich also um die Datenbasis an sich mitsamt eines Datenbankmanagementsystems bzw. ein Modul, welches lesend und schreibend auf die Datenbank zugreifen kann. Das Anfragen erfolgt besonders effizient, da die Anfrage einmal gestellt werden kann und sodann wird die Anfrage persistent gespeichert. Das Datenbanksystem gibt erst dann einen Rückgabewert zurück, falls alle Suchkriterien vorliegen. Somit kann es durchaus möglich sein, dass die Rückgabe zeitversetzt ist, was vorliegend sogar dem typischen Fall entspricht, da die Datensätze typischerweise noch nicht vorhanden sind. Es folgt also kein iteratives Anfragen, zu dem der Benutzer Rückgabewerte erhält, die nicht vollständig seiner Anfrage entsprechen, sondern vielmehr muss sich der Benutzer erfindungsgemäß damit zufriedengeben, dass gegebenenfalls eine gewisse Zeitspanne vergeht, bis die Datensätze vorliegen. Hierzu kann auch ein Time-out spezifiziert werden, welcher angibt, nachdem beispielsweise eine Fehlermeldung zurückgegeben wird. Dies ist dann der Fall, wenn der angefragte Datensatz innerhalb der vorgegebenen Zeitspanne nicht vorhanden ist.

In einem vorbereitenden Verfahrensschritt erfolgt ein Einrichten eines Kommunikationskanals zwischen einer Anfrageeinheit und einer dem Datenbanksystem vorgeschalteten Monitoreinheit. Bei der Anfrageeinheit kann es sich um ein technisches Gerät des Benutzers handeln bzw. ist gegebenenfalls kein menschliches Zutun notwendig und die Anfrageeinheit erstellt selbsttätig Anfragen. Hierzu wird eine Verbindung zwischen der Anfrageeinheit und einer Monitoreinheit hergestellt, wobei die Monitoreinheit wiederum Zugriff auf das Datenbanksystem hat. Bei dem Datenbanksystem kann es sich auch nur um die Datenbank an sich handeln und die Monitoreinheit übernimmt die Funktionalität, welche schreibend und/ oder lesend auf die Datenbank zugreift.

Der Kommunikationskanal kann derart eingerichtet werden, dass ein sogenanntes Token erstellt wird, mit dem die Anfrageeinheit Anfragen an die Monitoreinheit übermittelt. Dies ermöglicht es eine gesonderte Rechtevergabe zu implementieren und entsprechende Sicherheitsvorkehrungen zu schaffen. Beispielsweise kann der Kommunikationskanal besonders gesichert werden.

Ferner erfolgt ein Strukturieren einer Anfrage an das Datenbanksystem durch die Anfrageeinheit derart, dass eine Mehrzahl von Konfigurationsdaten spezifiziert wird. Hierbei handelt es sich also um das Erstellen einer Suchanfrage, wobei jedoch nicht nur ein einzelnes Kriterium bereitgestellt wird. Vielmehr wird eine Vielzahl bzw. Mehrzahl von Konfigurationsdaten, also mindestens drei Konfigurationsdaten bereitgestellt. Somit wird ein Datensatz spezifiziert, der angefragt wird, aber noch nicht in dem Datenbanksystem bzw. der Datenbank verfügbar ist. Ist der Datensatz verfügbar bzw. vorhanden, so können herkömmliche technische Lehren Einsatz finden und es kann sogleich der spezifizierte Datensatz zurückgegeben werden. Die Konfigurationsdaten beschreiben Eigenschaften des Datensatzes, und beschreiben insbesondere welcher Datensatz genau von der Anfrageeinheit bzw. von dem Benutzer erwartet wird. Der Datensatz soll durch das Datenbanksystem bereitgestellt werden und über die Monitoreinheit an die Anfrageeinheit übermittelt werden.

Das Strukturieren kann derart erfolgen, dass die Konfigurationsdaten hierarchisch aufgebaut werden und sodann gemäß dieser Hierarchie abgefragt werden. So können Konfigurationsdaten, welche typischerweise so auch in vorhandenen Datensätzen realisiert sind, zuerst abgefragt werden und speziellere Konfigurationsdaten zuletzt. Auf diese Art und Weise ist eine Priorisierung der Konfigurationsdaten möglich, sodass die Anfrage strukturiert ablaufen kann. Auch kann die Hierarchie, beispielsweise eine Baumstruktur, mehrere Ebenen aufweisen, sodass die Konfigurationsdaten derart gegliedert werden, dass zuerst Konfigurationsdaten auf einer ersten Konfigurationsebene abgeprüft werden und sodann auf einer zweiten.

Gemäß einem weiteren Verfahrensschritt erfolgt ein persistentes Hinterlegen der strukturierten Anfrage in der Monitoreinheit mittels des eingerichteten Kommunikationskanals durch die Anfrageeinheit. Somit wird also die Anfrage in einem persistenten Datenspeicher abgelegt und nicht lediglich in einem Pufferspeicher. Dies ist deshalb der Fall, da der Datensatz, der angefragt wurde, noch nicht vorhanden ist und somit ist es nicht möglich den angefragten Datensatz in Echtzeit zurückzugeben. Vielmehr wird die Anfrage mindestens so lange abgespeichert, bis der verfügbare Datensatz vorhanden ist oder eben ein Time-out erfolgt.

Sobald die strukturierte Anfrage in der Monitoreinheit persistent hinterlegt ist kann diese in dem Datenbanksystem die Konfigurationsdaten iterativ abprüfen. Somit wird also innerhalb des Datenbanksystems überprüft, ob ein Datensatz bereitgestellt werden kann, der alle Konfigurationsdaten erfüllt. Das iterative Abprüfen kann in Intervallen erfolgen, welche derart spezifiziert werden, dass diese nach einer regelmäßigen Zeit durchgeführt werden oder aber es erfolgt ein iteratives Überprüfen, sobald sich neue Datensätze in dem Datenbanksystem befinden oder bestehende Datensätze bezüglich ihrer Konfigurationsdaten geändert werden.

Sobald der Datensatz verfügbar ist, das heißt also es ist in dem Datenbanksystem ein Datensatz hinterlegt, der die spezifizierten Konfigurationsdaten aufweist, wird dieser ausgelesen und zurückgegeben. Demgemäß erfolgt ein Auslesen des Datensatzes aus dem Datenbanksystem durch die Monitoreinheit und ein Übersenden des Datensatzes an die Anfrageeinheit. Beispielsweise ist in dem Datenbanksystem ein Datensatz vorhanden, der zwei von drei Konfigurationsdaten aufweist. Hierauf erfolgt eine Anfrage und das System erkennt, dass ein Datensatz vorhanden ist, der fast alle Konfigurationsdaten aufweist. Wird nunmehr diese Datensatz derart abgeändert, dass alle drei Konfigurationsdaten vorliegen, so wird dieser zurückgegeben. Darüber hinaus ist es möglich, dass der nicht vorhandene Datensatz erstellt wird und sodann erkennt dieses System, dass ein neuer Datensatz verfügbar ist, der alle Konfigurationsdaten aufweist. Dieser wird dann zurückgegeben. Erfindungsgemäß wird nicht jedes Mal von dem Benutzer eine neue Anfrage übermittelt, sondern vielmehr wird die Anfrage abgespeichert und falls der Datensatz zeitverzögert aufgefunden wird, wird die Anfrage beantwortet. Somit wird also in Kauf genommen, dass die Anfrage erst zu einem späteren Zeitpunkt beantwortet wird. Der Benutzer muss nicht jedes Mal neu die Datenbank durchsuchen, sondern kann sich darauf verlassen, dass das erfindungsgemäße Verfahren proaktiv den gesuchten Datensatz zurückliefert, falls dieser vorhanden ist.

Erfindungsgemäß ist es möglich, dass beispielsweise ein Datensatz gesucht wird, der durch eine bestimmte Person erstellt wurde und gemäß einer hinterlegten Ortsinformation an einem bestimmten Ort erstellt wurde. Darüber hinaus wird eine Zeit spezifiziert, zu der der Datensatz erstellt werden soll. Das vorgeschlagene Verfahren prüft alle Konfigurationsdaten ab und übersendet einen Datensatz lediglich dann, wenn alle drei Kriterien erfüllt sind. Bei den Konfigurationsdaten kann es sich beispielhaft um eine Person, eine Gruppe, ein Konzept, ein Objekt, einen geographischen Ort, eine Technologie, ein Ereignis oder einen Zeitpunkt handeln. Da die Anfrage strukturiert wird, können auch Abhängigkeiten zwischen den Konfigurationsdaten spezifiziert werden. Eine solche Abhängigkeit kann wiederum als eine Konfigurationsdateneinheit kodiert werden.

Gemäß einem Aspekt der vorliegenden Erfindung erfolgt das persistente Hinterlegen in einem dezentralen Datenspeicher. Dies hat den Vorteil, dass unterschiedliche Datenbanksysteme verteilt angesprochen werden können und somit kann ein Lastenmanagement bzw. eine optimierte Lastenverteilung durchgeführt werden. Darüber hinaus ist es möglich, dass die Monitoreinheit auf mehrere Einheiten verteilt ist und somit kann in einem Computernetzwerk aus unterschiedlichen Datenquellen ausgelesen werden, ob ein bereitzustellender Datensatz verfügbar ist. Das Datenbanksystem kann generell unterschiedliche Datenquellen aufweisen, welche in einem Computernetzwerk verteilt sein können.

Gemäß einem weiteren Aspekt der vorliegenden Erfindung ist die Anfrageeinheit dezentral in einem Computernetzwerk verteilt. Dies hat den Vorteil, dass ein kollektives Anfragen möglich ist und dass auch von den Anfrageeinheiten dezentral in dem Computernetzwerk gesucht werden kann. So können mehrere Anfrageeinheiten wiederum mehrere Monitoreinheiten ansprechen und somit ist ein effizientes Suchen in dem Computernetzwerk möglich.

Gemäß einem weiteren Aspekt der vorliegenden Erfindung wird eine relative und/ oder absolute Zeitspanne definiert, nach der das Verfahren terminiert. Dies hat den Vorteil, dass ein Abbruchkriterium beziehungsweise ein Time-out definiert werden kann, der angibt, wann das Verfahren abgebrochen wird. Hierzu kann eine Fehlermeldung zurückgegeben werden und dem Benutzer bzw. der Anfrageeinheit kann mitgeteilt werden, dass innerhalb der Zeitspanne kein entsprechender Datensatz gefunden wurde.

Gemäß einem weiteren Aspekt der vorliegenden Erfindung greift das Datenbanksystem auf in einem Computernetzwerk verteilte Datenquellen zu. Dies hat den Vorteil, dass das Datenbanksystem ebenfalls dezentrale Datenquellen abfragen kann und somit kann das Datenbanksystem eine einheitliche Antwort zurückgeben, die jedoch aus unterschiedlichen Datenquellen stammt. Insgesamt ist es durch die Verteiltheit im Computernetzwerk möglich, dass auch Datensätze derart zusammengesetzt werden, dass diese die spezifizierten Konfigurationsdaten erfüllen. Werden beispielsweise drei Konfigurationsdaten spezifiziert, so kann aus unterschiedlichen Datenquellen ein einziger Datensatz zusammengesetzt werden, der insgesamt alle drei Konfigurationsdaten erfüllt, wobei die Teildatensätze jeweils nur eine Konfigurationsdateneinheit realisieren. Somit kann also das Datenbanksystem bzw. die Monitoreinheit diverse Teildatensätze zusammenfügen, wobei jeder Teildatensatz mindestens einer Konfigurationsdateneinheit entspricht und der Datensatz insgesamt in seiner zusammengesetzten Form aller spezifizierten Konfigurationsdaten entspricht.

Gemäß einem weiteren Aspekt der vorliegenden Erfindung sind die Anfrageeinheit, die Monitoreinheit und das Datenbanksystem kommunikativ in Serie geschaltet. Dies hat den Vorteil, dass die Monitoreinheit zwischen der Anfrageeinheit und dem Datenbanksystem vermittelt. Somit ist es möglich einen Sicherheitsaspekt zu implementieren derart, dass die Anfrageeinheit nicht direkt auf das Datenbanksystem zugreift. Somit kann in der Monitoreinheit ein Rechtemanagement bzw. ein Filter implementiert werden.

Gemäß einem weiteren Aspekt vorliegenden Erfindung sind die Anfrageeinheit, die Monitoreinheit und das Datenbanksystem kommunikativ in Serie geschaltet, wobei mindestens ein unidirektionaler Pfad vorgesehen ist. Dies hat den Vorteil, dass nur in eine Richtung kommuniziert werden kann und dass ein gesonderter Rückkanal vorgesehen wird. Auf diese Art und Weise ist es möglich, Rückgabewerte nicht direkt auf dem Kommunikationspfad zu empfangen, sondern vielmehr wird gemäß dieser Topologie ein Kreis implementiert, der von der Anfrageeinheit, an die Monitoreinheit und an das Datenbanksystem kommuniziert und sodann direkt von dem Datenbanksystem an die Anfrageeinheit kommuniziert oder von der Monitoreinheit an die Anfrageeinheit. Somit werden also pro Kommunikationsrichtung gesonderte Pfade implementiert. Dies kann hardwaretechnisch durchgeführt werden oder aber auch softwaretechnisch.

Gemäß einem weiteren Aspekt vorliegenden Erfindung stellen die Konfigurationsdaten einen Hinweis auf eine Geolokation und/ oder ein Dateiattribut des Datensatzes bereit. Dies hat den Vorteil, dass spezifiziert werden kann, wo der Datensatz abgespeichert ist bzw. welche Dateiattribute der Datensatz aufweisen muss. Die Geolokation ist diejenige geographische Koordinate, an der der Datensatz abgespeichert ist. So kann ein besonders nahes Rechenzentrum spezifiziert werden und beispielsweise kann eine Dateigröße als Dateiattribut spezifiziert werden.

Gemäß einem weiteren Aspekt vorliegenden Erfindung spezifizieren die Konfigurationsdaten einen Zeitpunkt, an dem der Datensatz erstellt oder verändert wird. Dies hat den Vorteil, dass weitere zeitliche Information hinterlegt werden kann und somit können auch Datensätze spezifiziert werden, die erst in der Zukunft erstellt bzw. verändert werden. So kann ein Datensatz zurückgegeben werden, sobald dieser von einem anderen Benutzer editiert wurde.

Gemäß einem weiteren Aspekt vorliegenden Erfindung werden die Konfigurationsdaten als ein logischer Ausdruck mit unterschiedlichen Bedingungen bereitgestellt. Dies hat den Vorteil, dass ein strukturierter Ausdruck bzw. eine strukturierte Anfrage gestellt werden kann und zudem können über die normalen Konfigurationsdaten hinaus, welche statisch definiert sind auch Bedingungen spezifiziert werden, die Abhängigkeiten zwischen den Konfigurationsdaten beschreiben.

Gemäß einem weiteren Aspekt vorliegenden Erfindung beschreiben die Konfigurationsdaten eine Änderungshistorie, welche ein Datensatz durchläuft. Dies hat den Vorteil, dass eine Abfolge von Schreiboperationen spezifiziert werden kann und falls diese erkannt wird, wird der entsprechende Datensatz zurückgegeben. Bei der Änderungshistorie kann auch spezifiziert werden, dass ein Datensatz gelesen wird und dann geschrieben wird. So ist eine Abfolge von lesenden und schreibenden Operationen spezifizierbar, die eine generelle Historie der Konfigurationsdaten beschreiben. Wird diese erkannt, wird der entsprechende Datensatz zurückgegeben.

Gemäß einem weiteren Aspekt der vorliegenden Erfindung werden additiv zu den Konfigurationsdaten semantische Daten bezüglich des Datensatzes bereitgestellt, welche ebenfalls vor dem Übersenden vorliegen müssen. Dies hat den Vorteil, dass auch inhaltliche Spezifikationen bereitgestellt werden können, die der gesuchte Datensatz und dann zurückgegebene Datensatz aufweisen müssen.

Die Aufgabe wird auch gelöst durch eine Systemanordnung umfassend ein Datenbanksystem mit verbessertem Systemdurchsatz, aufweisend eine Schnittstelleneinrichtung eingerichtet zum Einrichten eines Kommunikationskanals zwischen einer Anfrageeinheit und einer dem Datenbanksystem vorgeschalteten Monitoreinheit; eine Anfrageeinheit eingerichtet zum Strukturieren einer Anfrage an das Datenbanksystem derart, dass eine Mehrzahl von Konfigurationsdaten eines bereitzustellenden aber noch nicht vorhandenen Datensatzes spezifiziert wird; eine Speichereinheit eingerichtet zum persistenten Hinterlegen der strukturierten Anfrage in der Monitoreinheit mittels des eingerichteten Kommunikationskanals durch die Anfrageeinheit; die Monitoreinheit eingerichtet zum iterativen Abprüfen der Konfigurationsdaten des bereitzustellenden Datensatzes; und die Monitoreinheit eingerichtet zum Auslesen des Datensatzes aus dem Datenbanksystem und zum Übersenden des Datensatzes an die Anfrageeinheit mittels des eingerichteten Kommunikationskanals sobald der Datensatz gemäß aller spezifizierten Konfigurationsdaten vorhanden ist.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen
- Figur 1:: ein schematisches Ablaufdiagramm eines Verfahrens zum Ansteuern und effizienten Abfragen eines Datenbanksystems gemäß einem Aspekt der vorliegenden Erfindung; und
- Figuren 2A und 2B:: jeweils ein schematisches Blockschaltdiagramm einer Systemanordnung umfassend ein Datenbanksystem gemäß jeweils einem weiteren Aspekt vorliegenden Erfindung.

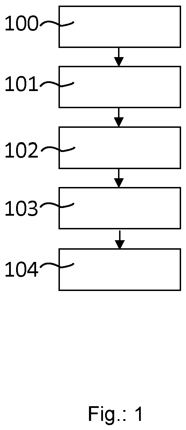

Figur 1 zeigt in einem schematischen Ablaufdiagramm ein Verfahren zum Ansteuern und effizienten Abfragen eines Datenbanksystems mit verbessertem Systemdurchsatz, aufweisend ein Einrichten 100 eines Kommunikationskanals zwischen einer Anfrageeinheit und einer dem Datenbanksystem vorgeschalteten Monitoreinheit; ein Strukturieren 101 einer Anfrage an das Datenbanksystem durch die Anfrageeinheit derart, dass eine Mehrzahl von Konfigurationsdaten eines bereitzustellenden aber noch nicht vorhandenen Datensatzes spezifiziert wird; ein persistentes Hinterlegen 102 der strukturierten 101 Anfrage in der Monitoreinheit mittels des eingerichteten 100 Kommunikationskanals durch die Anfrageeinheit; ein iteratives Abprüfen 103 der Konfigurationsdaten des bereitzustellenden Datensatzes durch die Monitoreinheit; und ein Auslesen 104 des Datensatzes aus dem Datenbanksystem durch die Monitoreinheit und Übersenden des Datensatzes an die Anfrageeinheit mittels des eingerichteten Kommunikationskanals sobald der Datensatz gemäß aller spezifizierten Konfigurationsdaten vorhanden ist.

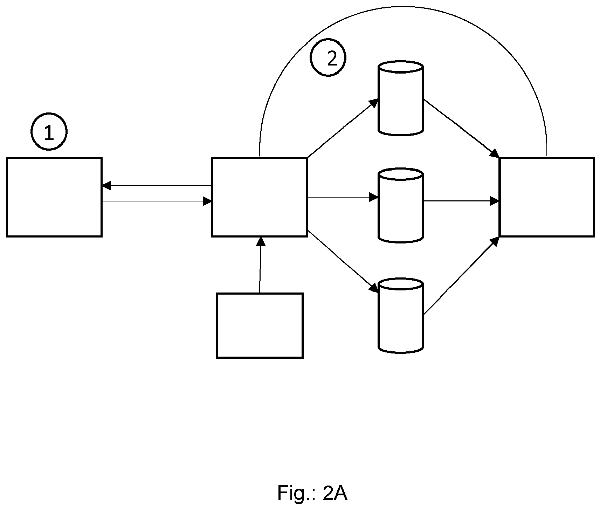

Figur 2A zeigt in einem schematischen Blockschaltbild auf der linken Seite die Anfrageeinheit, welche mittels eines unidirektionalen Datenpfads mit der Monitoreinheit kommuniziert. Die Monitoreinheit kommuniziert mit beispielhaft drei Datenquellen. Die drei Datenquellen können Teil des Datenbanksystems sein. Erfindungsgemäß ist es möglich, dass der eingerichtete Kommunikationspfad unidirektionalen ist, weshalb ein weiterer unidirektionaler Rückpfad eingerichtet ist. Dies ist vorliegend mit Bezugszeichen 1 gezeigt. Es handelt sich also bei dem eingerichteten Kommunikationskanal um zwei Datenpfade, welche jeweils unidirektionalen sind. Der Datenkanal kann also als simplex oder dual- simplex bezeichnet werden. Der Datenkanal kann hardwaretechnisch oder softwaretechnisch derart eingerichtet werden, dass jede Kommunikationsrichtung über einen gesonderten Kommunikationskanal implementiert ist. Auf der ganz rechten Seite in der vorliegenden Figur 2A ist eine Rückgabeeinheit spezifiziert, welche bei einem Vorliegen des Datensatzes gemäß einer Konfigurationsdaten eine Datenrückgabe an die Monitoreinheit mittels des Pfeils mit Bezugszeichen 2 vornimmt. Vorliegend von unten eingezeichnet ist eine Einheit, welche optional weitere Parameter bereitstellt, beispielsweise eine Zeitspanne, nach der das Verfahren terminiert, falls der Datensatz nicht gefunden wurde.

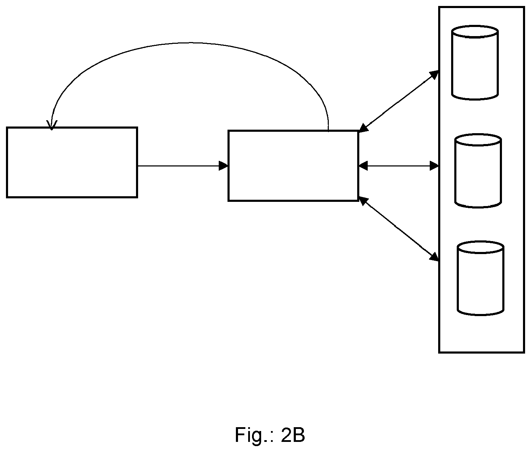

Figur 2B zeigt eine ähnliche Anordnung, wobei auf der ganz rechten Seite ein Datenbanksystem eingezeichnet ist, welches die drei Datenquellen umfasst. Die Anzahl drei ist wiederum nur beispielhaft eingeführt. Vorliegend sind zwischen dem Datenbanksystem und der Monitoreinheit in der Mitte bidirektionale Pfade eingezeichnet. Die Rückgabe von der Monitoreinheit in der Mitte an die Anfrageeinheit links erfolgt wiederum beispielhaft unidirektionalen mit getrennten Kommunikationspfaden.

## Patentansprüche

1. Verfahren zum Ansteuern und effizienten Abfragen eines Datenbanksystems mit verbessertem Systemdurchsatz, aufweisend:
- ein Einrichten (100) eines Kommunikationskanals zwischen einer Anfrageeinheit und einer dem Datenbanksystem vorgeschalteten Monitoreinheit;
- ein Strukturieren (101) einer Anfrage an das Datenbanksystem durch die Anfrageeinheit derart, dass eine Mehrzahl von Konfigurationsdaten eines bereitzustellenden aber noch nicht vorhandenen Datensatzes spezifiziert wird;
- ein persistentes Hinterlegen (102) der strukturierten (101) Anfrage in der Monitoreinheit mittels des eingerichteten (100) Kommunikationskanals durch die Anfrageeinheit;
- ein iteratives Abprüfen (103) der Konfigurationsdaten des bereitzustellenden Datensatzes durch die Monitoreinheit; und
- ein Auslesen (104) des Datensatzes aus dem Datenbanksystem durch die Monitoreinheit und Übersenden des Datensatzes an die Anfrageeinheit mittels des eingerichteten Kommunikationskanals sobald der Datensatz gemäß aller spezifizierten Konfigurationsdaten vorhanden ist.

2. Verfahren nach Anspruch 1, **dadurch gekennzeichnet, dass** das persistente Hinterlegen (102) in einem dezentralen Datenspeicher erfolgt.

3. Verfahren nach Anspruch 1 oder 2, **dadurch gekennzeichnet, dass** die Anfrageeinheit dezentral in einem Computernetzwerk verteilt ist.

4. Verfahren nach einem der vorhergehenden Ansprüche, **dadurch gekennzeichnet, dass** eine relative und/ oder absolute Zeitspanne definiert wird, nach der das Verfahren terminiert.

5. Verfahren nach einem der vorhergehenden Ansprüche, **dadurch gekennzeichnet, dass** Datenbanksystem auf in einem Computernetzwerk verteilte Datenquellen zugreift.

6. Verfahren nach einem der vorhergehenden Ansprüche, **dadurch gekennzeichnet, dass** die Anfrageeinheit, die Monitoreinheit und das Datenbanksystem kommunikativ in Serie geschaltet sind.

7. Verfahren nach einem der vorhergehenden Ansprüche, **dadurch gekennzeichnet, dass** die Anfrageeinheit, die Monitoreinheit und das Datenbanksystem kommunikativ in Serie geschaltet sind, wobei mindestens ein unidirektionaler Pfad vorgesehen ist.

8. Verfahren nach einem der vorhergehenden Ansprüche, **dadurch gekennzeichnet, dass** die Konfigurationsdaten einen Hinweis auf eine Geolokation und/ oder eine Dateiattribut des Datensatzes bereitstellen.

9. Verfahren nach einem der vorhergehenden Ansprüche, **dadurch gekennzeichnet, dass** die Konfigurationsdaten einen Zeitpunkt spezifizieren, an dem der Datensatz erstellt oder verändert wird.

10. Verfahren nach einem der vorhergehenden Ansprüche, **dadurch gekennzeichnet, dass** die Konfigurationsdaten als ein logischer Ausdruck mit unterschiedlichen Bedingungen bereitgestellt werden.

11. Verfahren nach einem der vorhergehenden Ansprüche, **dadurch gekennzeichnet, dass** die Konfigurationsdaten eine Änderungshistorie beschreiben, welche eine Datensatz durchläuft.

12. Verfahren nach einem der vorhergehenden Ansprüche, **dadurch gekennzeichnet, dass** additiv zu den Konfigurationsdaten semantische Daten bezüglich des Datensatzes bereitgestellt werden, welche ebenfalls vor dem Übersenden vorliegen müssen.

13. Systemanordnung umfassend ein Datenbanksystem mit verbessertem Systemdurchsatz, aufweisend:
- eine Schnittstelleneinrichtung eingerichtet zum Einrichten (100) eines Kommunikationskanals zwischen einer Anfrageeinheit und einer dem Datenbanksystem vorgeschalteten Monitoreinheit;
- eine Anfrageeinheit eingerichtet zum Strukturieren (101) einer Anfrage an das Datenbanksystem derart, dass eine Mehrzahl von Konfigurationsdaten eines bereitzustellenden aber noch nicht vorhandenen Datensatzes spezifiziert wird;
- eine Speichereinheit eingerichtet zum persistenten Hinterlegen (102) der strukturierten (101) Anfrage in der Monitoreinheit mittels des eingerichteten (100) Kommunikationskanals durch die Anfrageeinheit;
- die Monitoreinheit eingerichtet zum iterativen Abprüfen (103) der Konfigurationsdaten des bereitzustellenden Datensatzes; und
- die Monitoreinheit eingerichtet zum Auslesen (104) des Datensatzes aus dem Datenbanksystem und zum Übersenden des Datensatzes an die Anfrageeinheit mittels des eingerichteten Kommunikationskanals sobald der Datensatz gemäß aller spezifizierten Konfigurationsdaten vorhanden ist.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
